(19)

**Europäisches Patentamt**
**European Patent Office**
**Office européen des brevets**

(11) **EP 2 189 752 A1**

(12) **EUROPEAN PATENT APPLICATION**

(43) Date of publication:
**26.05.2010 Bulletin 2010/21**

(51) Int Cl.:
*G01B 11/24* (2006.01)
*G02B 21/34* (2006.01)
*G01N 21/17* (2006.01)

(21) Application number: **08020154.4**

(22) Date of filing: **19.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Stichting Dutch Polymer Institute**
**5612 AB Eindhoven (NL)**

(72) Inventor: **The designation of the inventor has not yet been filed**

(74) Representative: **Ackermann, Joachim**
**Postfach 11 13 26**
**60048 Frankfurt am Main (DE)**

(54) **Method of enhancing the contrast of surfaces and use thereof**

(57)    Disclosed is a method for improving the characterization of reflecting surfaces of a sample by means of optical profilometry comprising the steps:
i) providing a sample with at least one sample surface to be characterized by an optical profilometry method,
ii) depositing at least one layer of a particulate material onto said sample surface to increase the diffuse reflectance of said sample surface, and
iii) performing the optical profilometry method to characterize the sample surface.

This method can be used in the analysis of manufactured micro-scale engineered parts, or in the characterization of microelectronic components, or to study samples of material of medical or of scientific relevance.

EP 2 189 752 A1

**Description**

This invention relates to the enhancement of the contrast of surfaces and to an improvement of the characterization of surfaces by optical profilometry techiques. This method can be used, for example, in the analysis of micron-size surface features of micromanufactured devices, semiconductor circuits, or the surfaces of biological or other natural systems.

The study of surface topology, such as the topology of microscopic surfaces, is an important tool for both industry and academia. The characterization of surfaces has gained increased importance with the expansion of microelectronics, rapid prototyping and micro mechanical electric systems ("MEMS") technology. Profilometry and confocal microscopy are utilized for example to investigate the dimensions of these objects.

However, surfaces with highly smooth finishes and with steep geometries are difficult to measure with these techniques. The principle mode of linear reflectance for smooth surfaces is by means of specular reflectance. Since the angle of reflected light equals the angle of incident light with respect to the surface normal, this means that the light directed at a sufficiently steep surface will be specularly reflected at angles that will be out-of-focus relative to the aperture and other optical components in the measurement system and the signal will be lost. In practice, this means that for most optical profilometry techniques based on specular reflectance, the only areas of a given sample that are measurable are those that are sufficiently orthogonal to the impinging light, and all other surfaces that are tilted too much are immeasurable.

When the surface of such structures is sufficiently steep, light will be reflected outside of the axial cone of the lens, and will not be measurable. This means that for structures with smooth surfaces and vertically inclined, e.g. micromachined parts or semiconductors, measurements of surface geometry are inaccessible to optical methods, such as interferometry or confocal microscopy.

The characterization of reflective surfaces by microscopic methods is known in the prior art. The known methods use specular and/or diffuse reflected radiation.

DE 195 43 020 A1, for example, discloses a method and an apparatus for the detection of analytical data by means of the interior of a diffuse reflecting matrix, preferably of a biological sample. In this method, light is directed to the sample and is detected at a locus different from the irradiation locus as secondary reflected light by a detection unit.

US-A-4,344,709 discloses a method of analyzing the specular reflectance of a test surface. The method involves measuring the reflectance characteristics of the surface at a plurality of angles of reflectance and comparing the measured values with values obtained from a mathematical equation describing the reflectance of a standard surface.

US-A-2003/0197926 discloses an illuminator for microscopy with an illumination element having scattering particles.

It is also known, to modify the reflectance of a surface by applying diffusely reflecting coatings. US-A-3,610,741 describes the coating of a surface by flame spraying of a synthetic saphire. This results in a modified diffuse reflectance of the surface which deviates less than 4 % over the whole visible spectrum. US-A-4,190,321 describes single layer coatings to a surface that renders the surface more light transmitting and less reflecting without attendant increase of diffuse scattering. The method encompasses deposition of a very thin wavelength metal film to the surface and to transform this metal film into an oxide or hydroxide microstructured layer. The coated article exhibits uniform optical properties over large angles of incidence and over broad ranges of wavelength. Thus an antireflective coating is formed.

Interferometry-based methods for measuring surface topography are a mature, well-established means in the field. However, to-date, there are no examples of surface modification as a means of improving the topological measurability of smooth, angled surfaces.

While optical profilometry methods, like white light interferometry or vertical scanning interferometry, are able to measure the heights of surfaces that are smooth and lay sufficiently parallel to the focal plane, they are unable to measure surface features that are angled too far away from this ideal.

For example, in the case of studying smooth, dome-shaped droplets and related systems, the tops of the domes are easily measurable, but the further away from the center of the dome, the more difficult it is to measure the angled surface. In other words, the area that is at the top is parallel to the focal plane and specularly reflects light at an angle that can still be collected by the optics and be measured, but the sides of the domed surface are at much more obtuse angles, and will specularly reflect light away from the optics, where the signal will be lost forever.

For such geometries, specular reflecance cannot yield a useable signal for analyzing the surface. This means that most of the structure is not directly measurable. In looking for alternative methods to improve the measurability of the systems, there are no known means of improving access to angled suraces with low diffuse reflectance using linear optics.

It is an object of the present invention to provide a simple and cost efficient method to enhance the characterization of surfaces, especially those which have a greater degree of vertical inclination, by optical profilometry methods.

A new method has been found to improve the measurability of such surfaces. By depositing a thin layer of particulates onto such surfaces, preferably on surfaces of microstructures, the percentage of light undergoing diffuse reflectance can be increased, which results in an improvement in the amount of useable signal reflected back into the system. It has been found that diffuse reflectance of light also yields a useful signal for profilometry measurements. As smooth, glossy surfaces do not diffusely reflect much impinging light, the addition of a layer of microparticles roughens the surface, and a larger fraction of light is diffusely reflected.

The present invention relates to a method for improving the characterization of reflecting surfaces by means of optical profilometry comprising the steps:

i) providing a sample with at least one sample surface to be characterized by an optical profilometry method,
ii) depositing at least one layer of a particulate material onto said sample surface to increase the diffuse reflectance of said sample surface, and
iii) performing the optical profilometry method to characterize the sample surface.

The method of this invention can be used with all optical profilometry methods that use electromagnetic radiation for the characterization of reflecting surfaces.

Typical optical profilometry methods are selected from the group consisting of vertical scanning interferometry, phase shifting interferometry, differential interference contrast microscopy (Nomarski microscopy), focus detection methods, pattern projection methods and ellipsometry.

Preferred focus detection methods are selected from the group of white light profilometry or of vertical scanning interferometry.

In a preferred version of the method of this invention an optical profilometry method is used for the characterization of reflecting surfaces comprising the steps:

iv) providing an electromagnetic radiation emitter unit illuminating a selected portion of the sample surface,
v) providing an electromagnetic radiation detection unit detecting electromagnetic radiation reflected from said selected portion of the sample surface, and
vi) providing at least one layer of a particulate material increasing the diffuse reflectance of the surface.

It has been found that modification of the diffuse reflectance of a surface using particle layers is a most effective and simple way of overcoming measurement limitations with optical instruments. Up to now, we are not aware any other technique which increases the measurability via profilometry of this kind of samples using linear optics.

To enhance diffuse reflectance, the minimal particulate grain size should be as large as or larger than the average wavelength of reflected radiation. Generally, the average diameter of the particles should be within the range of 0.8x to 2x the wavelength of the reflected radiation of interest. If radiation of different wavelengths is used, then the minimal particulate size for effective improvement in diffuse reflectance is 0.8x to 2x that of the shortest wavelength of interest.

The term "average particle diameter" as used in this specification shall mean the $D_{50}$ value of the diameter.

The term "electromagnetic radiation" as used in this specification shall mean all kinds of electromagnetic radiation. Examples thereof are radiofrequency waves, infrared and visible light, UV light and X-rays. Preferably infrared-, visible- and UV-radiation is used.

For light in the visible range between 380 and 750 nm, this means that the particles should have a diameter between approximately 305 and 1500 nm. However, in the interest of ensuring that the particle coating itself does not alter the geometry of the surface excessively, the particles should generally be as close to the wavelength of the light as possible.

The particles used in forming the diffuse reflectance enhancing layer(s) can have a broad range of particle sizes, of particle size distribution and of particle shapes.

Typical average particle diameters ($D_{50}$) are in a range between 380 nm and 1,000 $\mu$m.

The number of layers of particles also affects the intensity of diffuse reflectance $I_m$ with an "infinitely thick" powder layer offering the greatest value for $I_m$. However thick layers can be problematic for microspcopy.

The diffuse reflectance of thick particle layers can be described, for example, by a modified Kubelka-Munk equation for diffuse reflectance for a powder layer of finite thickness according to the following formula:

$$R_n = \frac{\left(1 - \frac{A}{(A+2)}\right)\left(e^{\left([A(A+2)]^{\frac{1}{2}}n\right)} - e^{\left(-[A(A+2)]^{\frac{1}{2}}n\right)}\right)}{\left(\left(1 + \left[\frac{A}{(A+2)}\right]^{\frac{1}{2}}\right)^2 e^{\left([A(A+2)]^{\frac{1}{2}}n\right)} - \left(\left(1 - \left[\frac{A}{(A+2)}\right]^{\frac{1}{2}}\right)\right)^2 e^{\left(-[A(A+2)]^{\frac{1}{2}}n\right)}\right)}$$

In this formula the variables have the following meaning (see: E.L. Simmons, Applied Optics 1975, 14, 1380-1386):

A = fraction of incident light absorbed by a particle

n = number of layers of particles

$R_n$ = diffuse reflectance

In general, films of particulates that are more than 10 layers thick, *i.e.* 3.8-7.5 $\mu$m for radiation in the visible range, be can be treated as infinitely thick for this application, and should be treated as the maximum recommended thickness, with films consisting of 4 or less layers being preferred, and films consisting of 1-2 layers being most preferred.

Thus, for optical profilometry method using visible light, such as visible light confocal microscopy, the overall thickness of the diffuse reflection enhancing layers in the method of this invention is generally between 300 nm and 6 $\mu$m, preferably between 300 nm and 3 $\mu$m, and very preferably between 380 nm and 1 $\mu$m.

As material for the diffuse reflection enhancing layer, all particulate materials can be used that are capable of increasing the proportion of diffuse reflection.

Generally, all particulate materials can be used that reflect at least a portion of the impinging electromagnetic radiation used for analysis.

One preferred particulate material is soot, preferably lamp black. When using lamp black, the control of the layer thickness and particle size is achieved using a standard candle. The standard ingeredient of a commercial available candle is paraffin, which consists of long-chain alkanes, for example of alkane with 18-32 aliphatic carbon atoms. While the main ingredient in paraffin is the mentioned mixture of aliphatic alkanes, lamp black/carbon black consist primarily of amorphous carbon, as well as a complex mixture of other products of incomplete combustion.

As alternatives for the soot formation, pure compounds can be used, such as camphor, stearin, ceresin or beeswax. It has been known for decades that burning camphor yields a particularly fine soot, which has been used frequently for technical applications. Alternatively, other soot types may be used. A large variety of soot types is commercially available.

Beyond the use of soot, particulates may be generated by chemical vapor deposition.

Examples thereof are metals or metal oxides, which can be evaporated or sputtered as a thin layer of as a plurality of thin layers in the vacuum.

For example, titania, zirconia, alumina, or silica particulates may be prepared by vapor-phase hydrolysis, yielding highly reflective particulates. As an example, titanium tetrachloride vapors may be decomposed in the presence of atmospheric moisture to yield titania particulates. Vapor phase hydrolysis of moisture-sensitive salts, such as titanium tetraisopropoxide, zirconium chloride, aluminium halides, aluminium borohydride, silicon alkoxides, silicon halides, and the like may be used in an analogous fashion to yield particulates preferably used in the method of this invention.

Another approach to preparing particulates involves the condensation of vaporized or sublimated liquids or solids onto the surface, or an analogous vapor deposition method.

Preferably, particulates are prepared by the vaporization or sublimation of a solid or liquid with a low but positive vapor pressure under ambient conditions and by depositing this onto the substrate. As the particulate material condenses onto the surface, particulates are formed and the surface shine is reduced.

Sublimation dyes, such as many anthraquinones, may be deposited in this manner. Likewise, other compounds, such as elemental iodine, may be used in a similar fashion.

One of the advantages of this approach is the prospect of reversibility, provided that the particulate material does not react with the substrate, it may be removed afterwards with the aid of heat or vaccum or both, yielding the original substrate in a clean, useable format.

In terms of diffuse reflectance and selection of materials for optimal optical properties, the ideal surface would demonstrate isotropic luminance, such that light falling on it is scattered in such a manner that the apparent brightness of the surface to an observer is the same regardless of the observer's angle of view, which is typically referred to as Lamberitan reflectance. However, a reflecting surface of this type is not necessarily needed. Many coatings, for example powder coatings, will not exhibit isotropic luminescence; as long as these coatings are able to facilitate diffuse reflectance of a measurable amount of light form the sufaces of interest, these coating are as well perfectly suited in the method of this invention.

For a Lambertian surface, the amount of light that is reflected in any given direction follows Lambert's cosine law, when illuminated by an external source of irradiation. For a given area element on the surface dA, the irradiance $I_0$ (energy of photons / time * area) for a given surface element at angle θ relative to the reflective surface will be proportional to the cosine of the angle between the illuminating source and the normal, given the following equation:

$$I_0 = \frac{I(\cos\theta)d\Omega dA}{[d\Omega_0(\cos\theta)]dA_0}$$

Where dΩ is and $d\Omega_0$ is the differential angle fraction of the wedge angle of incoming light impinging on the surface, and the subtended solid angle formed between the surface area and the aperture at the detector, respectively.

In terms of material choices, the diffuse reflectance of the material can be statistically calculated using the following equation:

$$R = ((1 + r^2 - t^2) + ((1 + r^2 - t^2)^2 - 4r^2)^{0.5} / 2r),$$

wherein t and r are transmittance and reflectance of a single particle, for a parallel plane model.

A large variety of samples can be chosen for the methods of this invention. The samples may be transparent or non-transparent for the electromagnetic radiation of interest.

Any sample of analytical interest can be used in the method of this invention. Non-biological samples and also biological samples, such as cells or tissues, are possible.

Non limiting examples of sample materials are inorganic materials, such as metals and metal compounds, for example oxides, sulfides or carbides, or semi-conducting materials, such as silicon, germanium or gallium-arsenide; ceramic materials, glasses or quartz; or organic compounds, such as small organic molecules, for example electrically conducting organic molecules, or polymers, for example thermoplastic polymers or duroplastic polymers.

Suitable samples can possess a large variety of properties. For example, they can be transparent or non-transparent, or they can be crystalline or non-crystalline or they can contain adjuvants, such as pigments, antistatic agents, fillers, reinforcing materials, lubricants, processing aids and heat and/or light stabilizers.

The sample surface to be investigated by the method of this invention may have any shape. The surface can be flat or non-flat, or preferably, the surface may contain at least one topologically curvaceous area of analytical interest, or at least one surface area of analytical interest that is not parallel to the focal plane of the instrument. For example, the sample may exhibit surfaces with a topography that is curved or steeply sloping away from being parallel to the focal plane. The method of this invention generally improves the measurability of surfaces with non-planar topology.

The equipment for performing the method of this invention can be chosen from known devices. Depending on the optical profilometry method used for the characterization of the surface the skilled artisan choses among the available equipment. For most applications, optical profilometry methods equipment is commercially available.

Preferably the method of this invention is used in combination with optical interferometry, vertical scanning interferometry, or confocal microscopy.

The invention relates also to the use of diffuse refraction enhancing particle layers for the characterization of surfaces by means of optical profilometry methods.

Preferably this method can be used in the analysis of manufactured micro-scale engineered parts, or in the characterization of microelectronic components, or to study samples of material of medical or of scientific relevance.

The following Examples illustrate the invention without any limitation.

Example 1 and Comparative Example 1

Hemisperical droplets of polyurethane were deposited onto a glass surface and analyzed with light confocal microscopy using a technique known as vertical scanning interferometry. The surface of the droplets was treated with soot generated from a standard paraffin candle.

In an alternative trial the same sample was prepared but not soot treated. When investigating the sample the same conditions as previously described were used.

In the case of measuring smooth, domed microstrucures, the areas at the top of the domes which is planar or nearly planar is measurable, since the light that impinges there is specularaly reflected back into the system. However, for those parts of the structures that are more angled, the light is specularly reflected away from the system, and the signal is therefore immeasurable. Therefore, whereas only a small area near the center of the droplet was measurable prior to deposition of the soot particles, almost the entire droplet was able to be topographically measured using the technique wherein a soot layer was formed on the surface of the droplets.

The improvement in performance for such materials can be explained by the improved diffuse reflectance of the sample surface, and by the loss in transparency. This latter effect results in light that would otherwise pass through transparent systems, being reflected back, yielding a useable signal of topograpy mapping.

**Claims**

1. A method for improving the characterization of reflecting surfaces of a sample by means of optical profilometry comprising the steps:

   i) providing a sample with at least one sample surface to be **characterized by** an optical profilometry method,
   ii) depositing at least one layer of a particulate material onto said sample surface to increase the diffuse reflectance of said sample surface, and
   iii) performing the optical profilometry method to characterize the sample surface.

2. The method according to claim 1, wherein the optical profilometry methods is selected from the group consisting of vertical scanning interferometry, phase shifting interferometry, differential interference contrast microscopy, focus detection methods, pattern projection methods and ellipsometry.

3. The method according to claim 2, wherein the focus detection method is selected from the group consisting of white light profilometry or of vertical scanning interferometry.

4. The method according to claim 1, wherein an optical profilometry method is used for the characterization of reflecting surfaces comprising the steps:

   iv) providing an electromagnetic radiation emitter unit illuminating a selected portion of the sample surface,
   v) providing an electromagnetic radiation detection unit detecting electromagnetic radiation reflected from said selected portion of the sample surface, and
   vi) providing at least one layer of a particulate material increasing the diffuse reflectance of the surface.

5. The method according to claim 1, wherein visible light in a range between 380 and 750 nm is used as electromagnetic radiation and wherein the particles of the particulate material have a diameter of between 300 and 600 nm.

6. The method according to claim 1, wherein the overall thickness of the diffuse reflectance enhancing layers is between 300 nm and 6 $\mu$m, preferably between 300 nm and 3 $\mu$m, and very preferably between 380 nm and 1 $\mu$m.

7. The method according to any of the claims 1 to 6, wherein the particulate material is soot, preferably lamp black or soot formed by burning pure aliphatic compounds, preferably camphor, stearin, ceresin or beeswax

8. The method according to any of the claims 1 to 6, wherein the particulate material is generated by chemical vapor deposition, preferably titania, zirconia, aluminia or silica particulates which are preferably prepared by vapor-phase hydrolysis of titanium tetrachloride, titanium tetraisopropoxide, zirconium chloride, and aluminium borohydride, aluminium halides, silicon alkoxides, and silicon halides.

9. The method according to any of the claims 1 to 6, wherein the particulate material is generated by the condensation of vaporized or sublimated liquids or solids onto the surface, or by an analogous vapor deposition method.

10. The method according to any of the claims 1 to 9, wherein the particulate material is removed after the characterization with the aid of heat or vaccum or both, yielding the original substrate in a clean, useable format.

11. The method according to any of the claims 1 to 10, wherein the material of the sample is selected from the group consisting of inorganic materials, preferably of metals, metal compounds, semi-conducting materials, ceramic materials, glasses or quartz; or of organic compounds, preferably of small organic molecules or of polymers.

12. The method according to any of the claims 1 to 11, wherein the sample surface is flat or non-flat, and preferably the surface contains at least one topologically curvaceous area of analytical interest, or at least one surface area of analytical interest that is not parallel to the focal plane.

13. Use of diffuse reflectance enhancing particle layers for the characterization of surfaces by means of optical profilometry methods.

14. Use of claim 13 wherein the optical profilometry method is confocal microscopy.

15. Use of the method of any one of the claims 1 to 12 in the analysis of manufactured micro-scale engineered parts, or in the characterization of microelectronic components, or to study samples of material of medical or of scientific relevance.

Europäisches
Patentamt

European
Patent Office

Office européen
des brevets

**EUROPEAN SEARCH REPORT**

Application Number

EP 08 02 0154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2005 054373 A1 (MTU AERO ENGINES GMBH [DE]) 16 May 2007 (2007-05-16)<br>* paragraph [0001] *<br>* paragraph [0005] - paragraph [0008] *<br>* paragraph [0020] *<br>* figure 1 *<br>----- | 1-4,13, 14 | INV.<br>G01B11/24<br>G01N21/17<br>G02B21/34 |
| X | DE 197 21 688 A1 (WILLYTEC KONSTRUKTION UND VERT [DE])<br>10 September 1998 (1998-09-10)<br>* page 1, line 3 - line 22 *<br>* page 9, line 44 - page 10, line 8; figures 1,2 *<br>* page 21, line 16 - line 19 *<br>----- | 1-4,13, 14 | |
| A | US 2004/075844 A1 (MARRON JOSEPH C [US] ET AL) 22 April 2004 (2004-04-22)<br>* paragraph [0042] - paragraph [0045]; figure 2 *<br>* paragraph [0066] *<br>* paragraph [0072] - paragraph [0074]; figures 3,4 *<br>----- | 1-4,13, 14 | |
| | | | TECHNICAL FIELDS SEARCHED (IPC)<br><br>G01B<br>G01N<br>G02B |

~~The present search report has been drawn up for all claims~~

| Place of search | Date of completion of the search | Examiner |
|---|---|---|
| Munich | 5 March 2009 | Petelski, Torsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................
& : member of the same patent family, corresponding document

EPO FORM 1503 03.82 (P04C01)

Europäisches
Patentamt

European
Patent Office

Office européen
des brevets

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

see annex

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 08 02 0154

The Search Division considers that the present European patent application does not comply with the requirements of unity of invention and relates to several inventions or groups of inventions, namely:

```
1. claims: 1-4, 13, 14

            Optical profilometry methods
                    ---

2. claims: 5-11

            Constitution of diffusive layer
                    ---

3. claims: 12, 15

            Constitution of sample
                    ---
```

## ANNEX TO THE EUROPEAN SEARCH REPORT
## ON EUROPEAN PATENT APPLICATION NO.

EP 08 02 0154

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2009

| Patent document cited in search report | Publication date | Patent family member(s) | | Publication date |
|---|---|---|---|---|
| DE 102005054373 A1 | 16-05-2007 | CA<br>WO<br>EP | 2627357 A1<br>2007056974 A1<br>1949027 A1 | 24-05-2007<br>24-05-2007<br>30-07-2008 |
| DE 19721688 A1 | 10-09-1998 | NONE | | |
| US 2004075844 A1 | 22-04-2004 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19543020 A1
- US 4344709 A
- US 20030197926 A
- US 3610741 A
- US 4190321 A

**Non-patent literature cited in the description**

- **E.L. Simmons.** *Applied Optics,* 1975, vol. 14, 1380-1386